Europäisches Patentamt

European Patent Office

Office européen des brevets

(19)

(11) Veröffentlichungsnummer: **0 217 046**
**B1**

(12) **EUROPÄISCHE PATENTSCHRIFT**

(45) Veröffentlichungstag der Patentschrift:
31.01.90

(51) Int. Cl.⁴: **A 61 C 13/225**

(21) Anmeldenummer: 86110353.9

(22) Anmeldetag: 26.07.86

(54) Verbindungsorgan zur lösbaren Verbindung einer Teil-Zahn-prothese mit einem Restgebiss.

(30) Priorität: 06.08.85 DE 3528144
09.04.86 DE 3611901

(73) Patentinhaber: Kipp, Manfred, Rüstringer Strasse 1a,
D-2945 Sande 1 (DE)

(43) Veröffentlichungstag der Anmeldung:
08.04.87 Patentblatt 87/15

(72) Erfinder: Kipp, Manfred, Rüstringer Strasse 1a,
D-2945 Sande 1 (DE)

(45) Bekanntmachung des Hinweises auf die Patenterteilung:
31.01.90 Patentblatt 90/5

(74) Vertreter: Jabbusch, Wolfgang, Dr., Elisabethstrasse 6,
D-2900 Oldenburg (DE)

(84) Benannte Vertragsstaaten:
AT BE CH DE FR GB IT LI LU NL SE

(56) Entgegenhaltungen:
EP-A- 0 069 167
WO-A-82/03763
CH-A- 441 614
FR-A- 1 238 612
FR-A- 1 584 920

## Beschreibung

Die Erfindung betrifft ein Verbindungsorgan zur lösbaren Verbindung einer Teil-Zahnprothese mit einem Restgebiß, wobei das Verbindungsorgan ein Gelenk ist, dessen quer zur Zahnreihe verlaufende Gelenkachse ein im Gelenk gehaltener Bolzen ist und das Gelenk zwei ringförmige, durch den Bolzen miteinander verbindbare Bolzenaufnahmen aufweist, von denen eine erste Bolzenaufnahme mit der Teil-Zahnprothese und eine zweite Bolzenaufnahme mit dem Restgebiß verbindbar ist, wobei die erste Bolzenaufnahme Teil eines Gabelkopfes ist, dessen Gabel von der ersten Bolzenaufnahme und einer etwa parallel zur ersten Bolzenaufnahme angeordneten Lasche gebildet ist, in der eine mit der Öffnung der ringförmigen ersten Bolzenaufnahme korrespondierende Durchbohrung angeordnet ist, deren Durchmesser dem Bolzen entspricht, wobei der Mindestabstand zwischen der ersten Bolzenaufnahme und der Lasche der Breite der zweiten Bolzenaufnahme entspricht.

Bei bekannten Verbindungsorganen wird die Teil-Zahnprothese mit Hilfe von Riegelfertigteilen mit dem Restgebiß verbunden. Bekannt sind beispielsweise für diesen Zweck Schwenk- und Drehriegel. Außerdem sind zur Verbindung der Teil-Zahnprothese mit dem Restgebiß Geschiebe- und Druckknöpfe bekannt.

Durch die bekannten starren Verbindungsorgane wird der auf die Teil-Zahnprothese wirkende Kaudruck, durch den die Zähne auf Zug belastet werden, auf das Restgebiß übertragen. Hierdurch wird das Restgebiß stark beansprucht und geschädigt. Auch die Verbindungsorgane unterliegen dadurch einem Verschleiß, durch den sie ihre gute Passung verlieren, so daß sie der Teil-Zahnprothese keinen festen Halt mehr bieten und relativ kostenaufwendig gegen neue Verbindungsorgane ersetzt werden müssen.

Bei einem nach der CH-PS 441 614 bekannten Verbindungsorgan der vorbeschriebenen Gattung wird der auf der Teil-Zahnprothese lastende Kaudruck nur zu einem geringen Teil über das Verbindungsorgan auf das Restgebiß übertragen und hauptsächlich durch ein Sattelteil, auf dem üblicherweise die Teil-Zahnprothese angeordnet ist und das auf dem Kieferkamm aufliegt, aufgefangen und relativ großflächig auf den Kieferkamm übertragen. Dadurch werden das Restgebiß und das Verbindungsorgan selbst weniger stark beansprucht, so daß sie einem geringeren Verschleiß unterliegen. Der Bolzen ist als Schraube ausgebildet, die ermöglichen soll, ein durch Abnutzung hervorgerufenes Lagerspiel durch Anziehen der Schraube zu kompensieren. Dies hat den Nachteil, daß das Nachziehen des Schraubbolzens im Mund des Prothesenträgers vom Zahnarzt vorgenommen werden muß. Schwerwiegender ist jedoch der Nachteil, daß die Prothese, z.B. zwecks Reinigung, nur nach Herausschrauben des Bolzens herausgenommen werden kann. Beispielsweise können Beschwerden, die durch zwischen Sattelteil der Prothese und Kieferkamm eingedrungene Speiserste verursacht werden, vom Prothesenträger nicht unverzüglich selbst beseitigt werden, da er zum Herausnehmen der Prothese die Hilfe des den Bolzen herausschraubenden Zahnarztes in Anspruch nehmen muß.

Der Erfindung liegt die Aufgabe zugrunde, ein Verbindungsorgan der eingangs genannten Gattung dahingehend zu verbessern, daß es bei optimaler Kaudruckverteilung leicht vom Prothesenträger selbst betätigbar ist.

Diese Aufgabe ist gemäß der Erfindung dadurch gelöst, daß der Bolzen in der ersten Bolzenaufnahme verschiebbar gehalten ist, und zwei, seinen Verschiebeweg in beiden Richtungen begrenzende Anschläge aufweist, von denen sich der den Verschiebeweg des Bolzens in Einschubrichtung begrenzende erste Anschlag im von der ersten Bolzenaufnahme aufnehmbaren Abschnitt des Bolzens und der zweite Anschlag im von der zweiten Bolzenaufnahme aufnehmbaren Abschnitt des Bolzens befindet.

Über das Gelenk sind die Teil-Zahnprothese und das Restgebiß gegeneinander beweglich miteinander verbunden.

Dadurch, daß der Bolzen verschiebbar ist, läßt er sich zumindest aus einer der Bolzenaufnahmen herausziehen, so daß die beiden Bolzenaufnahmen und somit auch das Restgebiß und die Teil-Zahnprothese leicht voneinander getrennt werden können.

In an sich bekannter Weise kann die zweite Bolzenaufnahme mit einer Krone verbunden sein, die zur Überkronung zumindest des der Teil-Zahnprothese benachbarten Zahns des Restgebisses dienen kann, wodurch die zweite Bolzenaufnahme in vorteilhafter Weise fest mit dem Restgebiß verbindbar ist.

Der Bolzen kann mit Vorteil so weit in der ersten Bolzenaufnahme verschoben werden, daß er die zweite Bolzenaufnahme freigibt und sich die beiden Bolzenaufnahmen voneinander lösen lassen. Durch die Anschläge wird der Bolzen an der ersten Bolzenaufnahme gehalten, so daß er nicht ganz herausrutschen und eventuell verloren gehen kann. Vorzugsweise ist die erste Bolzenaufnahme, in der der Bolzen gelagert ist, den Zahninnenseiten benachbart angeordnet, so daß der Bolzen mit Vorteil mit Hilfe der Zunge in die zweite Bolzenaufnahme eingeschoben werden kann.

Vorzugsweise werden die miteinander verbundenen Bolzenaufnahmen von der Teil-Zahnprothese übergriffen, damit sich die Teil-Zahnprothese lückenlos an das Restgebiß anschließt. Beispielsweise kann die erste Bolzenaufnahme in der Wandung eines hohl ausgebildeten künstlichen Zahnes integriert sein und die zweite Bolzenaufnahme, die mit dem Restgebiß verbunden ist, durch einen seitlichen Schlitz in den Hohlraum dieses Zahnes eingeschoben werden. Vorzugsweise schließt der Bolzen in eingeschobener Stellung mit seiner in das Mundinnere weisenden Stirnseite mit der Wandung des hohlen, künstlichen Zahnes ab, so daß der Bolzen nur mit Hilfe eines Werkzeuges, z.B. mit einem Dorn oder ähnlichem, durch eine in der Wandung des künstlichen Zahns angeordnete Zugangsöffnung, die mit den Bolzenaufnahmen korrespondiert, aus dem künstlichen Zahn heraus verschoben werden kann. Dieses einfache Werkzeug kann der Prothesenträger selber leicht handhaben.

In seiner eingeschobenen Stellung wird der Bolzen endseitig sowohl in der Öffnung der ersten Bolzenaufnahme, als auch in der Durchbohrung der Lasche gehalten, so daß der in das Gelenk eingeschobene Bolzen in drei Führungen geführt ist. Dabei kann die Lasche ebenso wie die erste Bolzenaufnahme in der Wandung eines Kunstzahnes eingearbeitet sein. Die zweite Bolzenaufnahme ist zwischen die erste Bolzenaufnahme und die Lasche einschiebbar. In eingeschobener Stellung des Bolzens wird die Öffnung der zweiten Bolzenaufnahme vom Bolzen durchgriffen und dadurch die zweite Bolzenaufnahme in der Gabel verriegelt. In ausgezogener Stellung des Bolzens kann die zweite Bolzenaufnahme aus der Gabel herausgezogen werden. Vorzugsweise entspricht der Abstand zwischen der ersten Bolzenaufnahme und der Lasche genau der Breite der zweiten Bolzenaufnahme, so daß diese in der Gabel ohne Spiel fixiert ist.

Der den Verschiebeweg des Bolzens in Einschubrichtung begrenzende erste Anschlag ist in einer möglichen Ausbildung ein endseitig am Bolzen angeordneter Kopf, der in eine in der ersten Bolzenaufnahme angeordneten Einsenkung eingesenkt werden kann, so daß er bei eingeschobener Stellung des Bolzens mit der Wandung der ersten Bolzenaufnahme bündig abschließt und so mit Vorteil aus der ersten Bolzenaufnahme keine scharfen Kanten vorstehen, die zu Verletzungen im Mundraum führen könnten.

Der zweite Anschlag, durch den der Verschiebeweg des Bolzens in der ersten Bolzenaufnahme begrenzt wird, kann mit Vorteil ein am Bolzen angeordneter Sprengring sein, der ein Herausziehen des Bolzens aus der ersten Bolzenaufnahme verhindert, der aber vom Bolzen abgenommen werden kann, sofern eine Entnahme des Bolzens, z.B. zu Reinigungszwecken oder zu einem Auswechseln des Bolzens, aus der ersten Bolzenaufnahme erwünscht ist. Vorzugsweise weist der Bolzen eine Ringnut auf, in die der Sprengring eingebracht ist. Die zweite Bolzenaufnahme weist in ihrer der ersten Bolzenaufnahme zugewandten Stirnseite vorzugsweise eine den Sprengring aufnehmende Ausnehmung auf, so daß der Sprengring bei eingeschobener Stellung des Bolzens in diese Ausnehmung eingesenkt werden kann. Durch die Einsenkung wird mit Vorteil der Verschiebeweg des Bolzens verlängert. Außerdem übernimmt der Sprengring mit Vorteil eine Dichtfunktion und erschwert dabei das Eindringen von Speiseresten in die Bolzenaufnahme, die die Funktion des Gelenkes beeinträchtigen könnten.

Nach einer nächsten Weiterbildung der Erfindung weist der Bolzen eine parallel zu seiner Längsmittelachse verlaufende Nut auf, in die ein an der ersten Bolzenaufnahme angeordneter Vorsprung radial eingreift. Der in die Nut des Bolzens eingreifende Vorsprung verhindert mit Vorteil ein Drehen des Bolzens um seine Längsmittelachse. Da die erste Bolzenaufnahme vorzugsweise in der Wandung eines Kunstzahnes eingearbeitet ist und der in der Regel vorhandene Kopf des Bolzens in diese Wandung bündig eingesenkt werden soll, muß der Kopf des Bolzens an seiner nach außen weisenden Stirnseite eine Oberflächenausbildung aufweisen, die kontinuierlich an die Zahnwandungsoberfläche anschließt. Dies bedeutet, daß die Oberfläche dieser Sirnseite nicht unbedingt axialsymmetrisch zur Längsmittelachse des Bolzens ausgebildet ist. Wäre der Bolzen um seine Längsmittelachse drehbar in der ersten Bolzenaufnahme gelagert, so würde die Oberfläche seiner Stirnseite in den meisten Drehstellungen nicht mit der Zahnoberfläche bündig abschließen, so daß Teile seines Stirnseitenrandes aus der Zahnoberfläche vorragen und zu Verletzungen im Mundraum führen könnten.

Bei einer bevorzugten Ausbildung des erfindungsgemäßen Verbindungsorgans ist an der erstern Bolzenaufnahme ein in den Verschiebeweg des Bolzens vorragendes, nachgiebiges Rastelement angeordnet, welches in zwei im Bolzen angeordneten Aufnahmen einrastbar ist, deren den Stirnseiten des Bolzens nächstgelegene Wandbereiche jeweils die den Verschiebeweg des Bolzens begrenzenden Anschläge sind. Als Anschläge können mit Vorteil ein verdickter Kopf des Bolzens und ein Sprengring entfallen, da der Bolzen nur so weit verschoben werden kann, bis das Rastelement in einer der beiden Aufnahmen einrastet, wobei durch die Einrastung des Rastelementes der Bolzen jeweils in seinen Endstellungen fixiert ist.

Das Rastelement ist vorzugsweise ein biegsamer Stift, beispielsweise aus Draht, der sekantenartig, beidendig in der Wandung der ersten Bolzenaufnahme eingespannt ist, und die Aufnahmen für den Stift sind vorzugsweise quer zur Bolzenlängsachse im Bolzen angeordnete Nuten. Die den Stirnseiten des Bolzens nächstgelegenen Flanken der Nuten verlaufen etwa quer zur Längsmittelachse des Bolzens, so daß sie als Anschläge fungieren können, während die diesen Anchlägen gegenüberliegenden Flanken der Nuten flacher verlaufen, so daß der Stift in dieser Richtung bei Verschieben des Bolzens wieder ausrasten kann. Beim Ausrasten wird der Stift, der beidendig eingespannt ist, in seinem Mittelbereich in Richtung der Wandung der ersten Bolzenaufnahme gekrümmt. Um dem gekrümmten Stift Raum zum Ausweichen zu geben, weist die Wandung der ersten Bolzenaufnahme vorzugsweise zwei miteinander korrespondierende Löcher auf, in die die Enden des Stiftes eingeführt sind und ist in der Wandung der ersten Bolzenaufnahme im Bereich zwischen den Löchern eine zur Einschmiegung des biegsamen Stiftes vorgesehene, parallel zum Stift verlaufende, längliche Ausnehmung angeordnet, die bei einer bevorzugten Ausbildung ein Schlitz ist. Der von den Nuten begrenzte Stiftanlagebereich des Bolzens ist vorzugsweise zu einem etwa walmdachförmigen Profil abgeschrägt, dessen zur Bolzenlängsachse parallele Firstlinie am Stift gleitend anliegt. Das walmdachförmige Profil sorgt für eine Verdrängung und Krümmung des Stiftes in Richtung der Wandung der ersten Bolzenaufnahme und die abgeschrägten Giebelflächen des walmdachförmigen Profils, die Flanken der Nuten sind, erlauben ein Ausrasten des Stiftes aus den Nuten.

Unabhängig von der speziellen Ausbildung des Rastelementes und der Aufnahmen für das Rastelement, sorgt das Rastelement nicht nur für eine Begrenzung des Verschiebeweges des Bolzens, sondern auch für eine drehfeste Anordnung des Bolzens, so daß der Bolzen nicht um seine Längsmittelachse verdreht werden kann. Eine Nut in dem Bolzen, in die ein Vorsprung radial eingreift, kann somit mit Vorteil entfallen.

Vorzugsweise kann das Rastelement so ausgebildet sein, daß der Bolzen mit Vorteil auch vollständig aus den Bolzenaufnahmen entnommen werden kann. Beispielsweise kann der Stift aus der Wandung der ersten Bolzenaufnahme herausziehbar sein.

Bei einer bevorzugten Ausbildung des Verbindungsorgans weist die zweite Bolzenaufnahme einen bei in den Gabelkopf eingesetzter zweiter Bolzenaufnahme und bei vorbestimmter Drehstellung der Bolzenaufnahmen zueinander an einem die erste Bolzenaufnahme und die Lasche miteinander zu der Gabel verbindenden Verbindungselement des Gabelkopfes anschlagenden, nach außen vorragenden Vorsprung auf. Durch diesen Vorsprung ist der mögliche Drehwinkel der beiden Bolzenaufnahmen zueinander begrenzt. Liegt der Vorsprung in vorbestimmter Drehstellung an dem Verbindungselement an, so wird ein auf den Zähnen lastender Kaudruck zusätzlich über den Vorsprung auch auf die zweite Bolzenaufnahme übertragen, so daß der Kaudruck günstiger verteilt wird.

Da der Verschiebeweg des Bolzens begrenzt ist, ragt auch bei ausgezogenem Bolzen ein Ende des Bolzens weiterhin in die zweite Bolzenaufnahme vor. Die zweite Bolzenaufnahme weist in ihrer Wandung bei einer bevorzugten Ausbildung einen Schlitz auf, der zu derjenigen Stirnseite der zweiten Bolzenaufnahme hin einseitig offen ist, welche der ersten Bolzenaufnahme zugewandt ist und der Schlitz weist eine Mindestbreite auf, die der Dicke des in die zweite Bolzenaufnahme vorragenden Endes des Bolzens entspricht, so daß die zweite Bolzenaufnahme trotz des noch in die zweite Bolzenaufnahme vorragenden Endes des Bolzens von der ersten Bolzenaufnahme entfernt werden kann, indem das vorragende Ende des Bolzens durch den Schlitz der zweiten Bolzenaufnahme aus der zweiten Bolzenaufnahme herausgeführt wird. Das in die zweite Bolzenaufnahme vorragende Ende kann vorzugsweise schmaler als der übrige Bereich des Bolzens ausgebildet sein, z.B. dadurch, daß das vorragende Ende des Bolzens abgeflacht ist.

Ausführungsbeispiele, aus denen sich weitere erfinderische Merkmale ergeben, sind in der Zeichnung dargestellt. Es zeigen:

Fig. 1 eine teilweise geschnitten dargestellte Draufsicht auf ein erstes Ausführungsbeispiel eines erfindungsgemäßen Verbindungsorgans,

Fig. 2 einen Querschnitt des erfindungsgemäßen Verbindugsorgans gemäß Fig. 1 entlang der in Fig. 1 mit II-II bezeichneten strichpunktierten Linie,

Fig. 3 einen Längsschnitt des erfindungsgemäßen Verbindungsorgans gemäß der Fig. 1 und 2 entlang der in Fig. 2 mit III-III bezeichneten strichpunktierten Linie,

Fig. 4 eine Explosionsdarstellung eines zweiten Ausführungsbeispieles eines erfindungsgemäßen Verbindungsorgans und

Fig. 5 einen Längsschnitt durch das Verbindungsorgan gemäß Fig. 4.

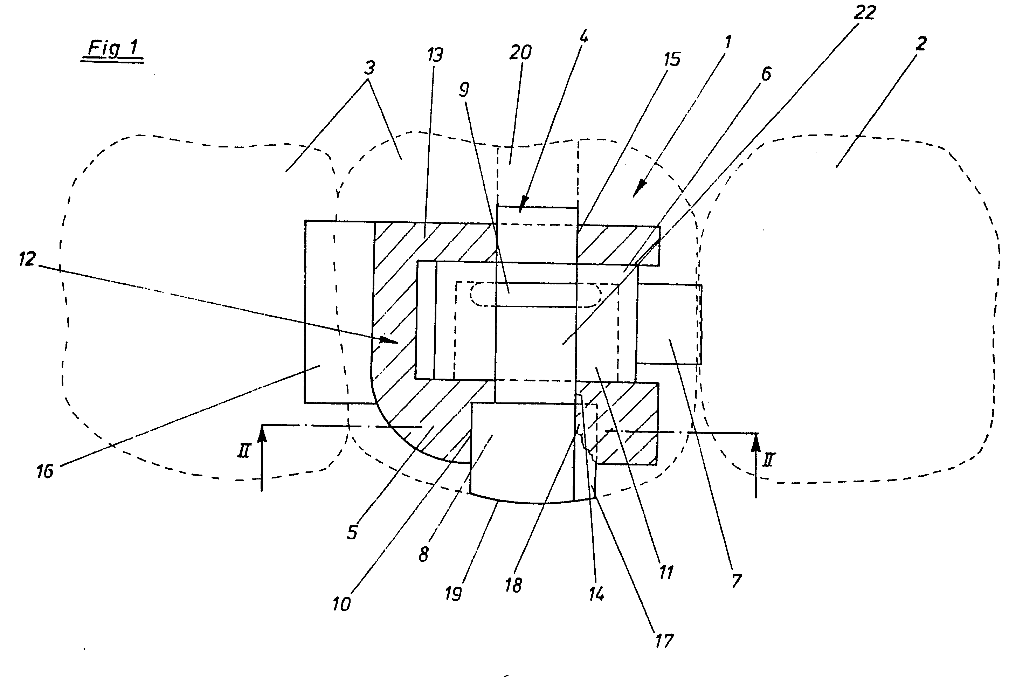

Fig. 1 zeigt eine teilweise geschnitten dargestellte Draufsicht auf das erfindungsgemäße Verbindungsorgan. Das Verbindungsorgan ist als Gelenk 1 ausgebildet, das ein Restgebiß, von dem in Fig. 1 die Umrisse eines Zahnes 2 mit einer gestrichelten Linie angedeutet sind, mit einer Teil-Zahnprothese, von der zwei Kunstzähne 3 mit gestrichelten Linien angedeutet sind, verbindet.

Das Gelenk 1 weist als Gelenkachse einen verschiebbar angeordneten Bolzen 4 auf, der eine erste Bolzenaufnahme 5 des Gelenkes 1, die in einem Kunstzahn 3 der Teil-Zahnprothese integriert ist, und eine zweite Bolzenaufnahme 6, die über einen Steg 7 mit dem Zahn 2 des Restgebisses verbunden ist, gegeneinander drehbeweglich lösbar miteinander verbindet.

Der Bolzen 4 ist verschiebbar in der ersten Bolzenaufnahme 5 gehalten, wobei sein Verschiebeweg in der ersten Bolzenaufnahme 5 an einer Seite durch einen als Kopf 8 ausgebildeten ersten Anschlag und auf der anderen Seite durch einen auf dem Bolzen 4 angeordneten, als Sprengring 9 ausgebildeten zweiten Anschlag begrenzt ist. Die erste Bolzenaufnahme 5 weist eine dem Kopf 8 zugeordnete Einsenkung 10 auf, in die der Kopf 8 bei in die zweite Bolzenaufnahme 6 eingeschobener Stellung eingesenkt ist. Die zweite Bolzenaufnahme 6 weist an ihrer dem Kopf 8 des Bolzens 4 zugewandten Stirnseite eine Ausnehmung 11 auf, um Raum für den radial von dem Bolzen 4 vorstehenden Sprengring 9 zu schaffen.

Die erste Bolzenaufnahme 5 ist Teil eines Gabelkopfes 12, dessen Gabel von der ersten Bolzenaufnahme 5 und einer parallel zur ersten Bolzenaufnahme 5 angeordneten Lasche 13 gebildet ist, in der eine mit der Öffnung 14 der ersten Bolzenaufnahme 5 korrespondierende Durchbohrung 15 angeordnet ist, in der das dem Kopf 8 abgewandte Ende des Bolzens 4 bei eingeschobener Stellung des Bolzens 4 gelagert ist.

Der Gabelkopf 12 weist einen Anker 16 auf, der zu der Verankerung des Gabelkopfes 12 in den Kunstzähnen 3 der Teil-Zahnprothese und der Verbindung der Kunstzähne 3 untereinander dient. Hierzu kann sich der Anker 16 durch die gesamte Teil-Zahprothese erstrecken. Damit die zweite Bolzenaufnahme 6 trotz der beengten Raumverhältnisse im Gebelkopf 12 vom Bolzen 4 gelöst werden kann, weist sie in ihrer Ringwandung einen einseitig zum Kopf 8 des Bolzens 4 hin offenen Schlitz 22 auf, der parallel zum Bolzen verläuft. Der Schlitz 22 ist so breit ausgebildet, daß der Bolzen 4, dessen freise Ende auch in ausgezogener Stellung in die Gabel des Gabelkopfes 12 vorragt, durch den Schlitz 22 hindurchgeführt werden kann.

Der Bolzen 4 weist in seinem Kopf 8 eine parallel zu seiner Längsmittelachse verlaufende Nut 17 auf, in die ein an der ersten Bolzenaufnahme 5 angeordneter Vorsprung 18 eingreift und den Bolzen 4 gegen eine Drehung um seine Längsmittelachse blockiert. Dies ist notwendig, weil die nach außen weisende Stirnfläche 19 des Kopfes 8, die an der Oberfläche des Kunstzahnes 3, in dem die erste Bolzenaufnahme 5 integriert ist, kontinuierlich anschließt, nicht unbedingt axialsymmetrisch zur Längsmittelachse des Bolzens 4 ausgebildet ist und daher ein kontinuierlicher Übergang von der Oberfläche des Kunstzahnes 3 zu der Stirnfläche 19 nur in einer bestimmten Drehstellung des Bolzens 4 gewährleistet ist.

Vorzugsweise ist das Gelenk 1 so eingesetzt, daß der Kopf 8 des Bolzens 4 zur Zahninnenseite weist und der Bolzen 4 mit Hilfe der Zunge eingeschoben werden kann. Ein Wiederherausschieben des Bolzens 4 ist beispielsweise mit einem entsprechenden Dorn durch eine in der Zahnwandung des Kunstzahnes 3 angeordneten Zugangsöffnung 20, durch die dem Kopf 8 abgewandte Stirnseite des Bolzens 4 zugänglich ist, möglich.

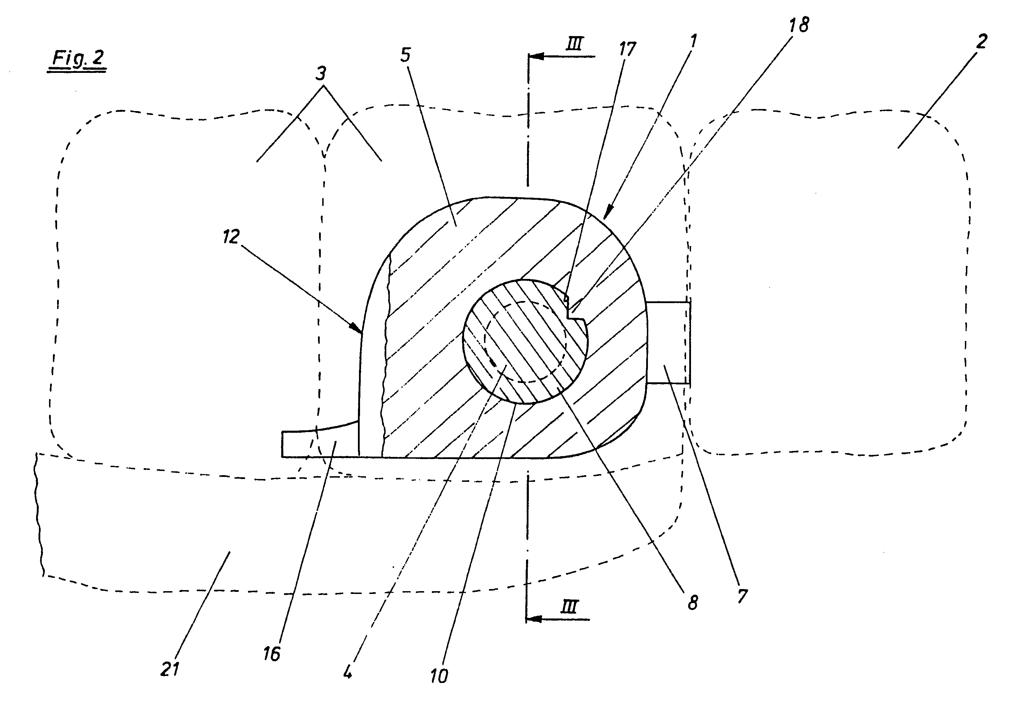

In Fig. 2 ist ein Querschnitt des erfindungsgemäßen Verbindungsorgans entlang der in Fig. 1 mit II-II bezeichneten strichpunktierten Linie dargestellt. Gleiche Bauelemente sind mit den gleichen Bezugszahlen bezeichnet wie in Fig. 1.

Insbesondere ist in Fig. 2 zu erkennen, daß der Kopf 8 des Bolzens 4 eine Nut 17 aufweist, in die ein Vorsprung 18 der ersten Bolzenaufnahme 5 eingreift und daß die Kunstzähne 3 der Teil-Zahnprothese ein Sattelstück 21 aufweisen, das auf einen Kieferkamm aufsetzbar ist.

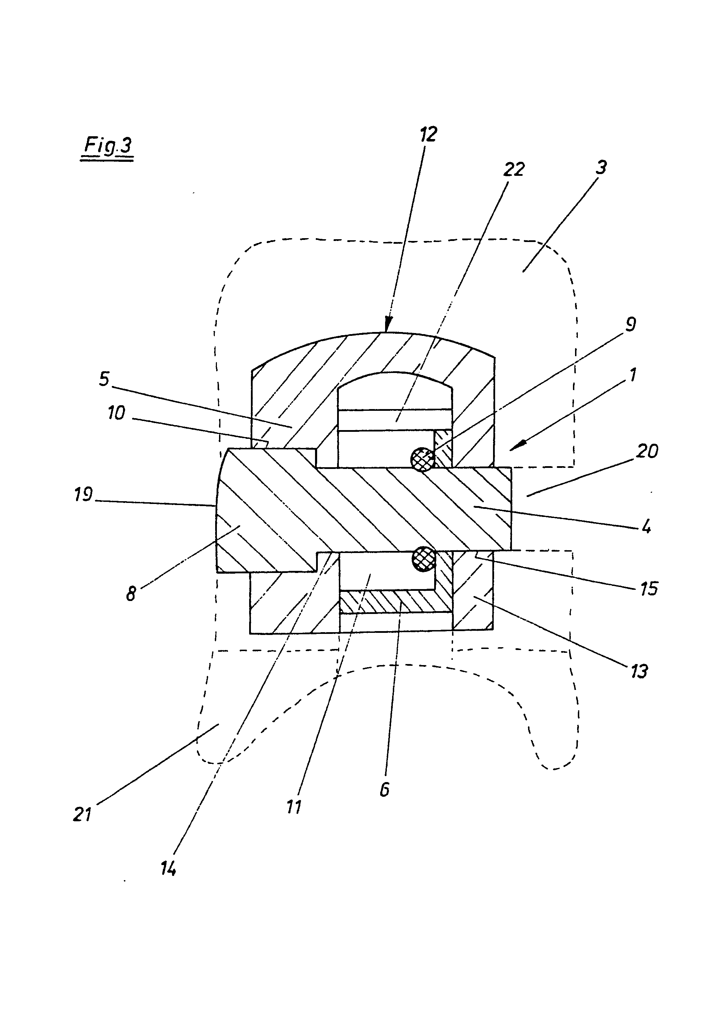

In Fig. 3 ist ein Längsschnitt des erfindungsgemäßen Verbindungsorgans entlang der in Fig. 2 mit III-III bezeichneten strichpunktierten Linie dargestellt. Gleiche Bauelemente sind mit den gleichen Bezugszahlen bezeichnet wie in den vorhergehenden Figuren.

In Fig. 3 ist insbesondere die Form des Sattelstückes 21 zu erkennen, das so ausgebildet ist, daß es einen Kieferkamm teilweise umgreifen kann. Außerdem ist eine Seitenbregrenzung des Schlitzes 22 zu erkennen, der in der Ringwandung der zweiten Bolzenaufnahme 6 angeordnet ist und dafür sorgt, daß die zweite Bolzenaufnahme 6 aus dem Gabelkopf herausgezogen werden kann und vom Bolzen 4 freigegeben wird, obwohl der Bolzen auch bei ausgezogener Stellung noch in den Zwischenraum zwischen der ersten Bolzenaufnahme 5 und der Lasche 13 vorragt.

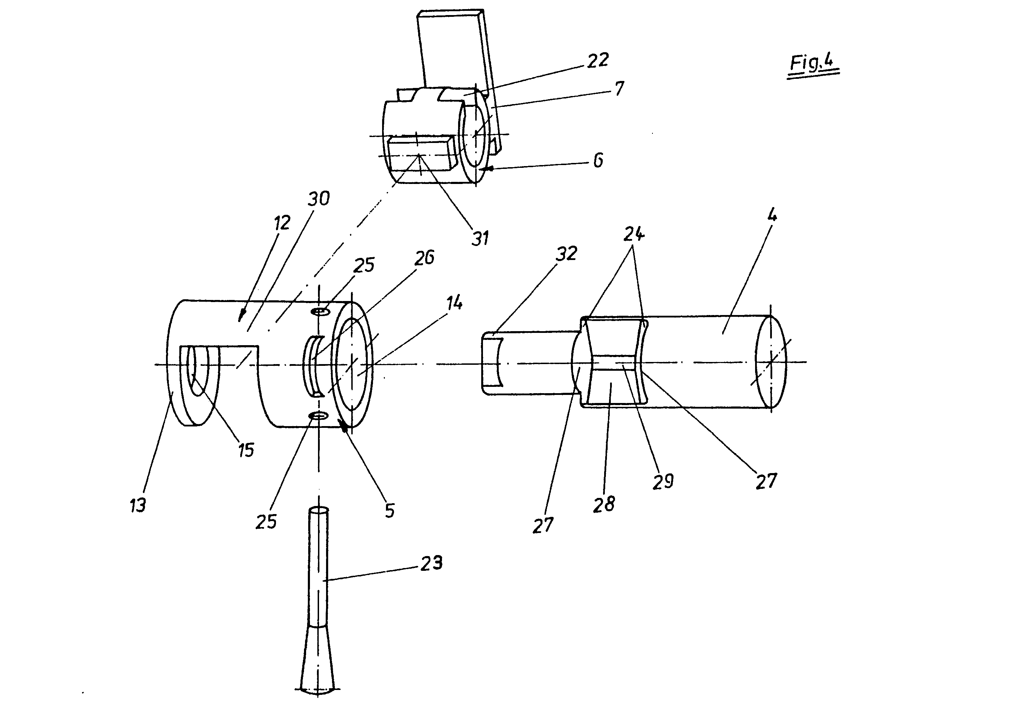

In Fig. 4 ist eine Explosionsdarstellung eines zweiten Ausführungsbeispiels eines Verbindungsorgans gezeigt. Gleiche Bauelemente sind mit den gleichen Bezugszahlen bezeichnet wie in den vorhergehenden Figuren.

In Fig. 4 ist der Gabelkopf 12 zu erkennen, der aus der ersten Bolzenaufnahme 5 und einer parallel zur ersten Bolzenaufnahme 5 ausgerichteten Lasche 13 gebildet ist, die mittels eines Verbindungselementes 30 zu einer Gabel miteinander verbunden sind. Durch die Öffnung 14 der ersten Bolzenaufnahme 5 und die mit ihr korrespondierende Durchgangsbohrung 15 der Lasche 13 ist der Bolzen 4 in den Gabelkopf 12 einschiebbar. In der Wandung der ersten Bohrung 5 ist ein Stift 23 sekantenartig einschiebbar, wobei die Enden des in die Wandung der ersten Bolzenaufnahme 5 eingeschobenen Stiftes 23 in Löchern 25 gelagert sind, die in der Wandung der ersten Bolzenaufnahme 5 eingebracht sind. In den Bolzen 4 sind zwei als Nuten ausgebildete Aufnahmen 24 eingebracht, die den Verschiebeweg des Bolzens 4 begrenzen und in die der Stift 23 einrasten kann. Die den Stirnseiten jeweils nächstgelegenen Flanken der Aufnahmen 24 sind als den Verschiebeweg des Bolzens 4 begrenzende Anschläge 27 für den Stift 23 ausgebildet. Der zwischen den Aufnahmen 24 befindliche Stiftanlagebereich 28 des Bolzens 4 ist zu einem walmdachförmigen Profil abgeschrägt, an dessen Firstlinie 29 der Stift 23 bei Verschieben des Bolzens 4 gleitend anliegt. Durch das walmdachförmige Profil wird der Stift 23 in Richtung der Wandung der ersten Bolzenaufnahme 5 gekrümmt, in der zur Aufnahme des Mittelbereiches des gekrümmten Stiftes 23 eine Ausnehmung 26 angeordnet ist.

In den Bereich des Gabelkopfes 12 zwischen der ersten Bolzenaufnahme 5 und der Lasche 13 ist die zweite Bolzenaufnahme 6 einbringbar, die durch den eingeschobenen Bolzen 4 schwenkbar mit dem Gabelkopf 12 verbindbar ist. Die zweite Bolzenaufnahme 6 weist einen Vorsprung 31 auf, der bei in den Gabelkopf 12 eingesetzter zweiter Bolzenaufnahme 6 in dem Zwischenraum zwischen der ersten Bolzenaufnahme 5 und der Lasche 13 radial vorragt und der in vorbestimmten Drehstellungen der beiden Bolzenaufnahmen 5, 6 zueinander an das Verbindungselement 30 des Gabelkopfes 12 anschlägt, wodurch der Drehwinkel der beiden Bolzenaufnahmen 5, 6 zueinander begrenzt ist.

Auch bei ausgezogenem, aber mit dem Stift 23 verrasteten Bolzen 4 ragt das Ende 32 des Bolzen noch in die zweite Bolzenaufnahme 6 vor. Damit die zweite Bolzenaufnahme bei dieser Stellung des Bolzens 4 aus dem Gabelkopf 12 entnommen werden kann, weist die zweite Bolzenaufnahme den Schlitz 22 auf, durch den das abgeflachte Ende 32 des Bolzens 4 hindurchgeführt werden kann.

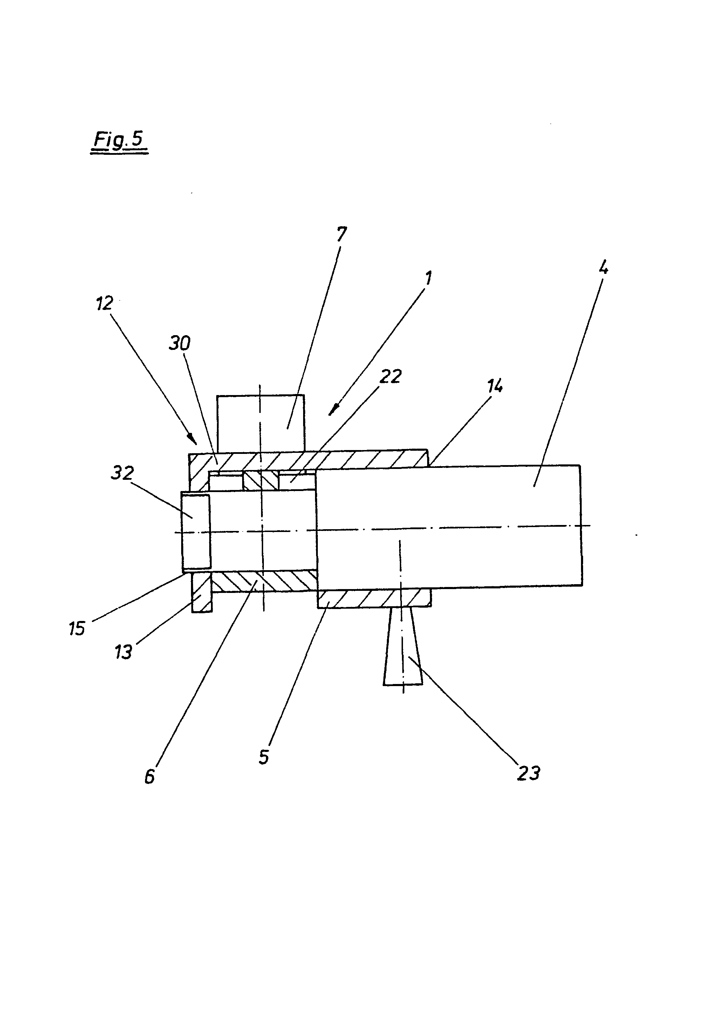

In Fig. 5 ist ein Längsschnitt des Verbindungsorgans gemäß Fig. 4 dargestellt. In der Darstellung der Fig. 5 ist das Verbindungsorgan in zusammengebautem Zustand gezeigt, so daß das Zusammenspiel der einzelnen Bauelemente erkennbar ist. Gleiche Bauelemente sind mit den gleichen Bezugszahlen bezeichnet wie in Fig. 4.

**Patentansprüche**

1. Verbindungsorgan zur lösbaren Verbindung einer Teil-Zahnprothese mit einem Restgebiß, wobei das Verbindungsorgan ein Gelenk (1) ist, dessen quer zur Zahnreihe verlaufende Gelenkachse ein im Gelenk (1) gehaltener Bolzen (4) ist und das Gelenk (1) zwei ringförmige, durch den Bolzen (4) miteinander verbindbare Bolzenaufnahmen (5, 6) aufweist, von denen eine erste Bolzenaufnahme (5) mit der Teil-Zahnprothese und eine zweite Bolzenaufnahme (6) mit dem Restgebiß verbindbar ist, wobei die erste Bolzenaufnahme (5) Teil eines Gabelkopfes (12) ist, dessen Gabel von der ersten Bolzenaufnahme (5) und einer etwa parallel zur ersten Bolzenaufnahme (5) angeordneten Lasche (13) gebildet ist, in der eine mit der Öffnung (14) der ringförmigen ersten Bolzenaufnahme (5) korrespondierende Durchbohrung (15) angeordnet ist, deren Durchmesser dem Bolzen (4) entspricht, wobei der Mindestabstand zwischen der ersten Bolzenaufnahme (5) und der Lasche (13) der Breite der zweiten Bolzenaufnahme (6) entspricht, dadurch gekennzeichnet, daß der Bolzen (4) in der ersten Bolzenaufnahme (5) verschiebbar gehalten ist, und zwei, seinen Verschiebeweg in beiden Richtungen begrenzende Anschläge (8, 9) aufweist, von denen sich der den Verschiebeweg des Bolzens (4) in Einschubrichtung begrenzende erste Anschlag im von der ersten Bolzenaufnahme (5) aufnehmbaren Abschnitt des Bolzens (4) und der zweite Anschlag im von der zweiten Bolzenaufnahme (6) aufnehmbaren Abschnitt des Bolzens (4) befindet.

2. Verbindungsorgan nach Anspruch 1, dadurch gekennzeichnet, daß der den Verschiebeweg des Bolzens (4) in Einschubrichtung begrenzende erste Anschlag ein endseitig am Bolzen (4) angeordneter Kopf (8) ist, und daß die erste Bolzenaufnahme (5) eine dem Kopf (8) zugeordnete Einsenkung (10) aufweist.

3. Verbindungsorgan nach einem der Ansprüche 1 bis 2, dadurch gekennzeichnet, daß der zweite Anschlag ein am Bolzen (4) angeordneter Sprengring (9) ist.

4. Verbindungsorgan nach Anspruch 3, dadurch gekennzeichnet, daß die zweite Bolzenaufnahme (6) in ihrer der ersten Bolzenaufnahme (5) zugewandten Stirnseite eine den Sprengring aufnehmende Ausnehmung (11) aufweist.

5. Verbindungsorgan nach einem der Ansprüche 1 bis 4, dadurch gekennzeichnet, daß der Bolzens (4) eine parallel zu seiner Längsmittelachse verlaufende Nut (17) aufweist, in die ein an der ersten Bolzenaufnahme (5) angeordneter Vorsprung (18) radial eingreift.

6. Verbindungsorgan nach Anspruch 1, dadurch gekennzeichnet, daß an der ersten Bolzenaufnahme (5) ein in den Verschiebeweg des Bolzens (4) vorragendes, nachgiebiges Rastelement angeordnet ist, welches in zwei im Bolzen (4) angeordneten Aufnahmen (24) einrastbar ist, deren den Stirnseiten des Bolzens (4) nächstgelegene Wandbereiche jeweils die den Verschiebeweg des Bolzens (4) begrenzenden Anschläge (27) sind.

7. Verbindungsorgan nach Anspruch 6, dadurch gekennzeichnet, daß das Rastelement ein biegsamer Stift (23) ist, der sekantenartig, beidendig in der Wandung der ersten Bolzenaufnahme (5) eingespannt ist und daß die Aufnahmen (24) für den Stift (23) quer zur Bolzenlängsachse im Bolzen (4) angeordnete Nuten sind.

8. Verbindungsorgan nach Anspruch 7, dadurch gekennzeichnet, daß die Wandung der ersten Bolzenaufnahme (5) zwei miteinander korrespondierende Löcher (23) aufweist, in die die Enden des Stiftes (23) eingeführt sind, und daß in der Wandung der ersten Bolzenaufnahme (5) im Bereich zwischen den Löchern (25) eine zur Einschmiegung des biegsamen Stiftes (23) vorgesehene, parallel zum Stift (23) verlaufende, längliche Ausnehmung (26) angeordnet ist.

9. Verbindungsorgan nach Anspruch 8, dadurch gekennzeichnet, daß die Ausnehmung (26) ein Schlitz ist.

10. Verbindungsorgan nach einem der Ansprüche 7 bis 9, dadurch gekennzeichnet, daß der von den Nuten begrenzte Stiftanlagebereich (28) des Bolzens (4) zu einem etwa walmdachförmigen Profil abgeschrägt ist, dessen zur Bolzenlängsachse parallele Firstlinie (29) am Stift (23) gleitend anliegt.

11. Verbindungsorgan nach einem der Ansprüche 1 bis 10, dadurch gekennzeichnet, daß die zweite Bolzenaufnahme (6) einen bei in den Gabelkopf (12) eingesetzter zweiter Bolzenaufnahme (6) und bei vorbestimmter Drehstellung der Bolzenaufnahme (5, 6) zueinander an einem die erste Bolzenaufnahme (5) und die Lasche (13) miteinander zu der Gabel verbindenden Verbindungselement (30) des Gabelkopfes (12) anschlagenden, nach außen vorragenden Vorsprung (31) aufweist.

12. Verbindungsorgan nach einem der Ansprüche 1 bis 11, dadurch gekennzeichnet, daß die zweite Bolzenaufnahme (6) in ihrer Ringwandung einen Schlitz (22) aufweist, der zu derjenigen Stirnseite der zweiten Bolzenaufnahme (6) hin einseitig offen ist, welche der ersten Bolzenaufnahme (5) zugewandt ist und daß der Schlitz (22) eine Mindestbreite aufweist, die der Dicke des bei ausgezogenem Bolzen (4) in die zweite Bolzenaufnahme (6) vorragenden Endes (32) des Bolzens (4) entspricht.

13. Verbindungsorgan nach Anspruch 12, dadurch gekennzeichnet, daß das in die zweite Bolzenaufnahme (6) vorragende Ende (32) des Bolzens (4) seitlich abgeflacht ist.


**Claims**

1. A connecting member for the detachable connection of a partial denture to original teeth, wherein the connecting member is a hinge (1) whose hinge axis running transversely to the row of teeth is a pin (4) held in the hinge (1) and the hinge (1) comprises two annular pin holders (5, 6) which can be connected to one another by the pin (4) and of which a first pin holder (5) can be connected to the partial denture and a second pin holder (6) can be connected to the original teeth, the first pin holder (5) being part of a fork head (12) of which the fork is formed by the first pin holder (5) and a tab (13) which is arranged substantially parallel to the first pin holder (5) and in which an aperture (15) corresponding to the opening (14) in the annular first pin holder (5) is arranged, the diameter of the aperture (15) corresponding to the pin (4), wherein the minimum distance between the first pin holder (5) and the tab (13) corresponds to the width of the second pin holder (6), characterised in that the pin (4) is movably held in the first pin holder (5) and comprises two stops (8, 9) which limit its path of movement in both directions and of which the first stop limiting the path of movement of the pin (4) in the entry direction is located in the portion of the pin (4) which can be held by the first pin holder (5) and the second stop is located in the portion of the pin (4) which can be held by the second pin holder (6).

2. A connecting member according to claim 1, characterised in that the first stop which limits the path of movement of the pin (4) in the entry direction is a head (8) arranged on the end of the pin (4) and in that the first pin holder (5) comprises a depression (10) allocated to the head (8).

3. A connecting member according to one of claims 1 to 2, characterised in that the second stop is a snap ring (9) arranged on the pin (4).

4. A connecting member according to claim 3, characterised in that the second pin holder (6), in its end face directed toward the first pin holder (5), comprises a recess (11) holding the snap ring.

5. A connecting member according to one of claims 1 to 4, characterised in that the pin (4) has a groove (17) which extends parallel to its longitudinal central axis and into which a projection (18) arranged on the first pin holder (5) engages radially.

6. A connecting member according to claim 1, characterised in that, on the first pin holder (5), there is arranged a pliable catch element which projects into the path of movement of the pin (4) and can engage in two holders (24) which are arranged in the pin (4) and whose wall regions closest to the end faces of the pin (4) each form the stops (27) limiting the path of movement of the pin (4).

7. A connecting member according to claim 6, characterised in that the catch is a flexible peg (23) which is clamped in secant fashion at both ends in the wall of the first pin holder (5) and in that the holders (24) for the peg (23) are grooves arranged transversely to the longitudinal axis of the pin in the pin (4).

8. A connecting member according to claim 7, characterised in that the wall of the first pin holder (5) has two mutually corresponding holes (25) into which the ends of the peg (23) are introduced and in that an elongate recess (26) which is provided for the nestling of the flexible peg (23) and extends parallel to the peg (23) is arranged in the wall of the first pin holder (5) in the region between the holes (25).

9. A connecting member according to claim 8, characterised in that the recess (26) is a slot.

10. A connecting member according to one of claims 7 to 9, characterised in that the peg contact region (28) of the pin (4) limited by the grooves is tapered to a substantially hipped roof shaped profile of which the ridge line (29) parallel to the longitudinal axis of the pin rests in sliding fashion on the peg (23).

11. A connecting member according to claims 1 to 10, characterised in that the second pin holder (6) has a projection (31) which projects outwardly and strikes a connecting element (30) of the fork head (12) which connects the first pin holder (5) and the tab (13) to one another to form the fork when the second pin holder (6) is inserted into the fork head (12) and when the pin holders (5, 6) are in a predetermined rotational position relative to one another.

12. A connecting member according to one of claims 1 to 11, characterised in that the second pin holder (6) has, in its annular wall, a slot (22) which is open at one end toward the end face of the second pin holder (6) turned toward the first pin holder (5) and in that the slot (22) has a minimum width corresponding to the thickness of the end (32) of the pin (4) projecting into the second pin holder (6) when the pin (4) is extracted.

13. A connecting member according to claim 12, characterised in that the end (32) of the pin (4) projecting into the second pin holder (6) is flattened at the sides.

## Revendications

1. Organe de liaison pour l'assemblage amovible d'une prothèse dentaire partielle avec un reste de dent, l'organe de liaison étant une articulation (1) dont l'axe d'articulation, perpendiculaire à la rangée de dents, est un pivot (4) maintenu dans l'articulation (1), et l'articulation (1) comporte deux logements de pivot (5, 6) annulaires, reliés entre eux par le pivot (4), dont un premier logement de pivot (5) peut être assemblé à la prothèse dentaire partielle, et un deuxième logement de pivot (6) au reste de dent, le premier logement de pivot (5) étant une partie d'une tête de fourche (12) dont la fourche est formée par le premier logement de pivot (5), et par une patte (13) à peu près parallèle au premier logement de pivot (5), dans laquelle est pratiqué un trou débouchant (15) correspondant à l'ouverture (14) du premier logement de pivot (5) annulaire, dont le diamètre correspond au pivot (4), la distance minimale entre le premier logement de pivot (5) et la patte (13) correspondant à la largeur du deuxième logement de pivot (6), caractérisé en ce que le pivot (4) est maintenu coulissant dans le premier logement de pivot (5), et comporte deux butées (8, 9) limitant son déplacement dans les deux sens, dont la première butée limitant le déplacement du pivot (4) dans le sens de l'introduction, se trouve dans la section du pivot (4) logée dans le premier logement de pivot (5), et la deuxième butée se trouve dans la section du pivot (4) logée dans le deuxième logement de pivot (6).

2. Organe de liaison selon la revendication 1, caractérisé en ce que la première butée limitant le déplacement du pivot (4) dans le sens de l'introduction, est une tête (8) placée à l'extrémité du pivot (4) et en ce que le premier logement de pivot (5) présente un creux (10) associé à la tête (8).

3. Organe de liaison selon l'une des revendications 1 ou 2, caractérisé en ce que la deuxième butée est un jonc (9) placé sur le pivot (4).

4. Organe de liaison selon la revendication 3, caractérisé en ce que le deuxième logement de pivot (6) comporte, dans sa face frontale tournée vers le premier logement de pivot (5), un évidement (11) dans lequel est logé le jonc.

5. Organe de liaison selon l'une des revendications 1 à 4, caractérisé en ce que le pivot (4) comporte une rainure (17) parallèle à son axe médian longitudinal, dans laquelle s'engage radialement une saillie (18) placée sur le premier logement de pivot (5).

6. Organe de liaison selon la revendication 1, caractérisé en ce qu'un élément d'encliquetage souple est placé sur le premier logement de pivot (5), dans le parcours de déplacement du pivot (4), lequel élément d'encliquetage peut s'encliqueter dans deux logements (24) placé dans le pivot (4), logements dont les zones de paroi les plus proches des faces frontales du pivot (4), constituent les butées (27) limitant le déplacement du pivot (4).

7. Organe de liaison selon la revendication 6, caractérisé en ce que l'élément d'encliquetage est une cheville (23) flexible qui, à la manière d'une sécante, est serrée à ses deux extrémités dans la paroi du premier logement de pivot (5), et en ce que les logements (24) de la cheville (23) sont des rainures pratiquées dans le pivot (4), perpendiculairement à l'axe longitudinal du pivot.

8. Organe de liaison selon la revendication 7, caractérisé en ce que la paroi du premier logement de pivot (5) comporte deux trous (25) correspondant entre eux, dans lesquels sont introduites les extrémités de la cheville (23), et en ce qu'un évidement (26) oblong, parallèle à la cheville (23), est prévu dans la zone comprise entre les trous (25), pour que la cheville (23) flexible puisse s'y adapter.

9. Organe de liaison selon la revendication 8, caractérisé en ce que l'évidement (26) est une fente.

10. Organe de liaison selon l'une des revendications 7 à 9, caractérisé en ce que la zone d'appui de cheville (28) du pivot (4), limitée par les rainures, est chanfreinée pour former un profil à peu près en forme de toit en croupe dont la ligne de faîte (29), parallèle à l'axe longitudinal du pivot, s'applique de manière à glisser sur la cheville (23).

11. Organe de liaison selon l'une des revendications 1 à 10, caractérisé en ce que le deuxième logement de pivot (6) comporte une saillie (31) dirigée vers l'extérieur, qui vient buter contre un élément de liaison (30) de la tête de fourche (12), reliant le premier logement de pivot (5) et la patte (13) entre eux, par rapport à la fourche, lorsque le deuxième logement de pivot (6) est placé dans la tête de fourche (12) et dans le cas d'une position en rotation définie des logements de pivot (5, 6) l'un par rapport à l'autre.

12. Organe de liaison selon l'une des revendications 1 à 11, caractérisé en ce que le deuxième logement de pivot (6) comporte, dans sa paroi annulaire, une fente (22) qui est ouverte à une extrémité, vers la face frontale du deuxième logement de pivot (6) qui est tournée vers le premier logement de pivot (5), et en ce que la fente (22) a une largeur minimale qui correspond à l'épaisseur de l'éxtrémité (32) du pivot (4), faisant saillie dans le deuxième logement de pivot (6), lorsque le pivot (4) est retiré.

13. Organe de liaison selon la revendication 12, caractérisé en ce que l'éxtrémité (32) du pivot (4), faisant saillie dans le deuxième logement de pivot (6), est aplatie latéralement.

Fig 1

Fig. 2

EP 0 217 046 B1

_Fig.3_

Fig.4

EP 0 217 046 B1

<u>Fig.5</u>